# EUROPEAN PATENT APPLICATION

(11) **EP 4 328 635 A1**
(43) Date of publication of application: **28.02.2024**
(21) Application number: 23193187.4
(22) Date of filing: 24.08.2023
(51) Int. Cl.: G02B 5/18, G02B 27/01

(54) **MACRO DUTY CYCLE GRATINGS**

(30) Priority: 24.08.2022 US 202217894675
(71) Applicant: Rockwell Collins, Inc., Cedar Rapids, IA 52498 (US)
(72) Inventor: STRATTON, Eric P., Redmond (US); BROWN, Robert D., Lake Oswego, 97035 (US)
(74) Representative: Dehns

(57) **Abstract**

A waveguide includes a grating structure with discontinuous regions of diffraction; regions of diffraction are interleaved with regions of no diffraction. The regions of diffraction and no diffraction may vary in size such that the width of each successive region of diffraction increases across the face of the waveguide. Neighboring regions of diffraction, separated by regions of non-diffraction, may define different periods.

## Description

### BACKGROUND

Waveguides in head-up displays (HUDs) and helmet mounted displays (HMDs) utilize diffraction gratings. Diffraction gratings for such waveguides rely on modulation of the grating structure to improve efficiency and uniformity of resulting images. Traditional gratings maintain the same period and completely fill the desired aperture on or within the waveguide.

One common method to create the grating structure is to modulate the duty cycle of the grating period. Manufacturability of waveguides with modulated duty cycles is problematic as feature sizes decrease from hundreds of nanometers to tens of nanometers. Similar issues arise when modulating the depth of the gratings where the aspect ratio grows to non-manufacturable levels. Feature sizes at the pitch and depth that are required to meet efficiency targets are prohibitive and difficult to manufacture.

It would be advantageous to have a new diffractive waveguide and method of manufacturing diffraction gratings that does not rely on untenable manufacturing processes.

### SUMMARY

In one aspect, embodiments of the inventive concepts disclosed herein are directed to a waveguide having, and method of manufacturing, a grating structure with discontinuous regions of diffraction; regions of diffraction are interleaved with regions of no diffraction.

In embodiments, the regions of diffraction and no diffraction may vary in size such that the width of each successive region of diffraction increases across the face of the waveguide.

In embodiments, neighboring regions of diffraction, separated by regions of non-diffraction, may define different periods.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1A shows a perspective, environmental view of a helmet mounted display including waveguides according to an exemplary embodiment;
FIG. 1B shows a side, environmental view of a helmet mounted display including waveguides according to an exemplary embodiment;
FIG. 1C shows a front, environmental view of a heads-up display including a waveguide according to an exemplary embodiment;
FIG. 2A shows a waveguide according to an exemplary embodiment;
FIG. 2B shows a detail view of a waveguide according to an exemplary embodiment;
FIG. 3 shows a side, detail view of a diffraction grating according to an exemplary embodiment;
FIG. 4 shows block representations of different grating duty cycles according an exemplary embodiment;

### DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments of the inventive concepts disclosed herein are directed to a waveguide having, and method of manufacturing, a grating structure with discontinuous regions of diffraction; regions of diffraction are interleaved with regions of no diffraction. The regions of diffraction and no diffraction may vary in size such that the width of each successive region of diffraction increases across the face of the waveguide. Neighboring regions of diffraction, separated by regions of non-diffraction, may define different periods.

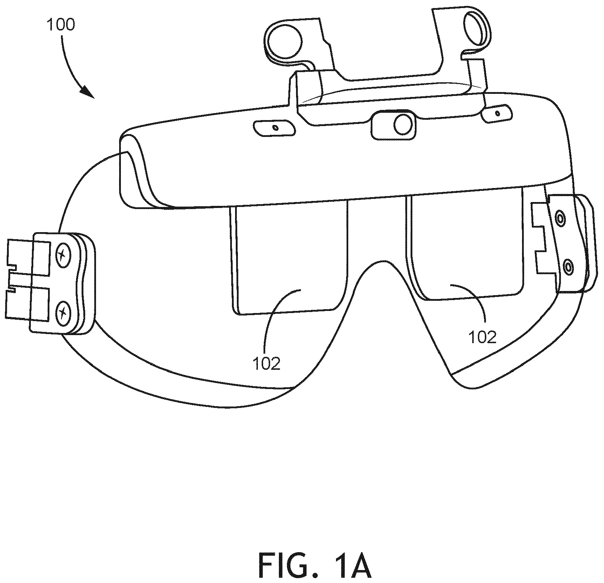

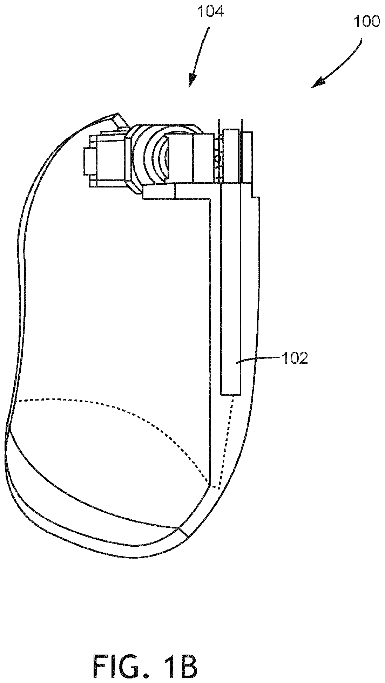

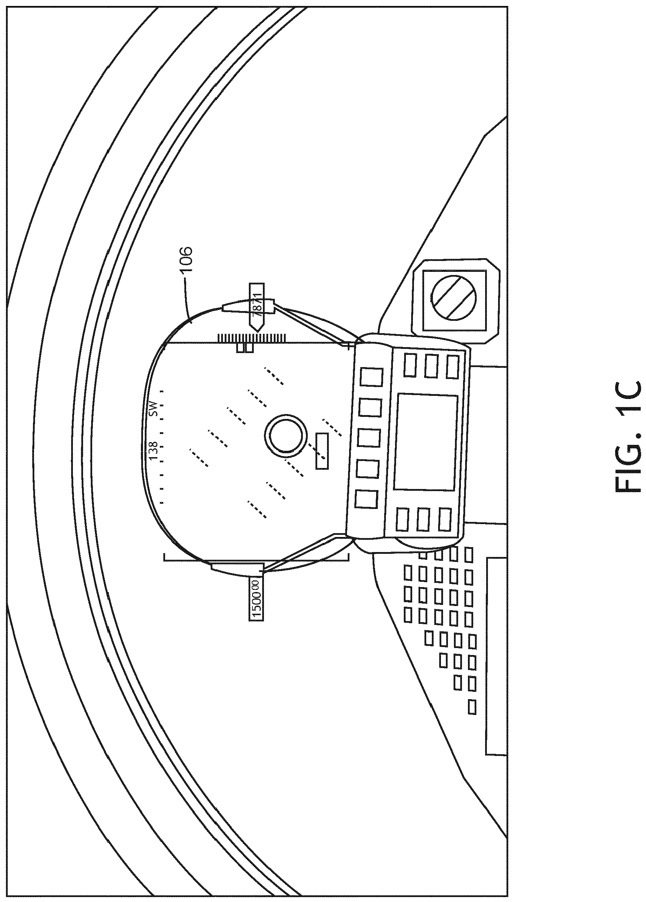

Referring to FIGS. 1A-1C, perspective and side, environmental views of a helmet mounted display 100 including waveguides 102 according to an exemplary embodiment are shown. The waveguides 102 are disposed within the body of an assembly containing optical and electronic components 104 disposed to project images via the waveguides 102.

It may be appreciated that waveguides 102 according to exemplary embodiments, while shown integrated into a helmet mounted display, may also be incorporated in head-up display 106, head mounted displays, smart glasses, or the like.

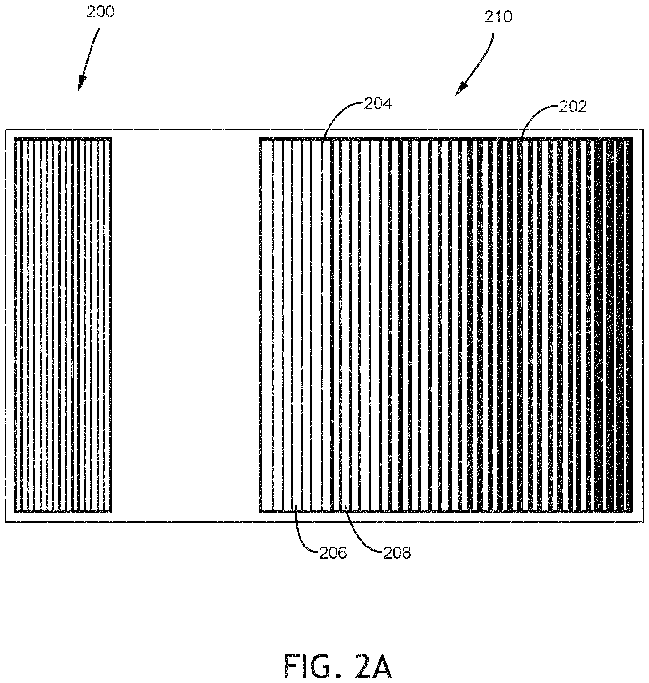

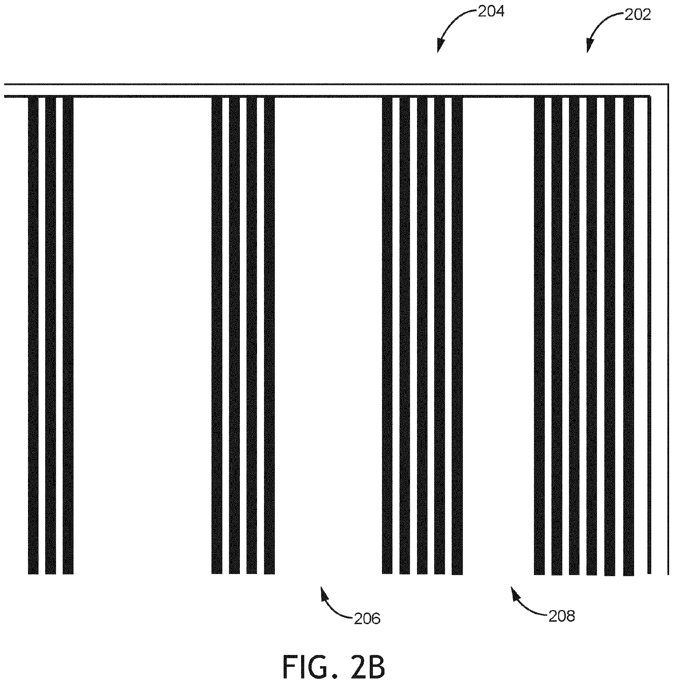

Referring to FIGS. 2A-2B, a waveguide according to exemplary embodiment and a detail view of a waveguide are shown. Gratings in a waveguide 210 are defined by their groove density (the number of line pairs per unit length), usually expressed in line pairs per millimeter (g/mm), and duty cycle, the ratio of grating groove width to the groove period (the inverse of the groove density). Optical gratings correspond to wavelengths between 100 nm and 10 µm for a groove density in the range of a few tens of grooves per millimeter to a few thousands of grooves per millimeter.

In at least one embodiment, the waveguide includes an output grating 210 that defines groove sets 202, 204, each including a fold or input grating 200 defined by a common groove density and duty cycle within the set 202, 204. Each groove set 202, 204 is separated from any neighboring groove sets 202, 204 by a region 206, 208 without any grooves. In at least one embodiment, the disposition of groove sets 202, 204 and regions 206, 208 without any grooves is conceptually similar to a large scale or macro duty cycle; a groove set and 202, 204 and associated region 206, 208 without any grooves corresponding to a macro period.

In at least one embodiment, the macro duty may vary across the surface of the waveguide output grating 210. For example, a first groove set 202 and a second groove set 204 may have the same groove density but different widths (different numbers of grooves). Likewise, corresponding regions 206, 208 without any grooves may have varying widths such that the macro period is substantially constant while the macro duty cycle varies over the surface of the waveguide output grating 210.

Alternatively, where the first groove set 202 and a second groove set 204 have the same groove density but different widths, the macro duty cycle may be substantially constant while the regions 206, 208 without any grooves and macro period vary over the surface of the waveguide output grating 210. Furthermore, where the regions 206, 208 without any grooves are defined by a substantially constant width, the widths of the groove sets 202, 204, the macro duty cycle, or the macro period may vary over the surface of the waveguide output grating 210.

In at least one embodiment, macro duty cycle modulation effectively turns the grating period on and off. Such modulation allows high yield manufacturability while still performing the uniformity and efficiency duties required by diffraction gratings. Manufacturability remains high because feature sizes of the waveguide output grating 210 remain consistent and above manufacturing limits. Modulation through blank periods is on the order of hundreds to thousands of grooves (i.e., line pairs) per millimeter. Because each diffraction period is on the order of 350 nm (2,857 g/mm), waveguides can utilize blank periods without impacting user visibility or the user experience. The human eye will resolve artifacts at one arc minute, so modulation of blank periods may be substantially below the one arc minute threshold.

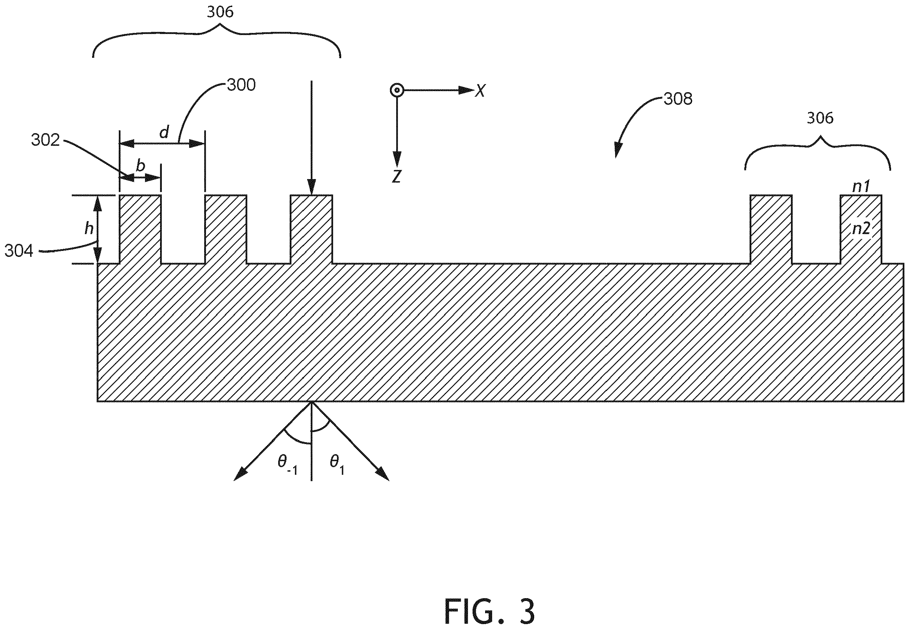

Referring to FIG. 3, a side, detail view of a waveguide according to an exemplary embodiment is shown. The waveguide defines a grating with grooves. The grooves are defined by a period 300, a duty cycle 302 corresponding to a ratio of the groove width to the period 300, and a depth 304. The grooves are produced via manufacturing processes such as photolithography, holography, chemical lithography, or the like.

Sets of regularly spaced grooves define patterned regions 306 of the waveguide. Patterned regions 306 are interspersed with un-patterned regions 308 to define a macro period. In at least one embodiment, the widths of patterned regions 306 may vary over the surface of the waveguide (i.e., the number of grooves in patterned regions 306 vary). Likewise, in at least one embodiment, the widths of un-patterned regions 308 may vary over the surface of the waveguide.

In at least one embodiment, the un-patterned regions 308 may vary across the length of the waveguide (i.e., along the length of the grooves).

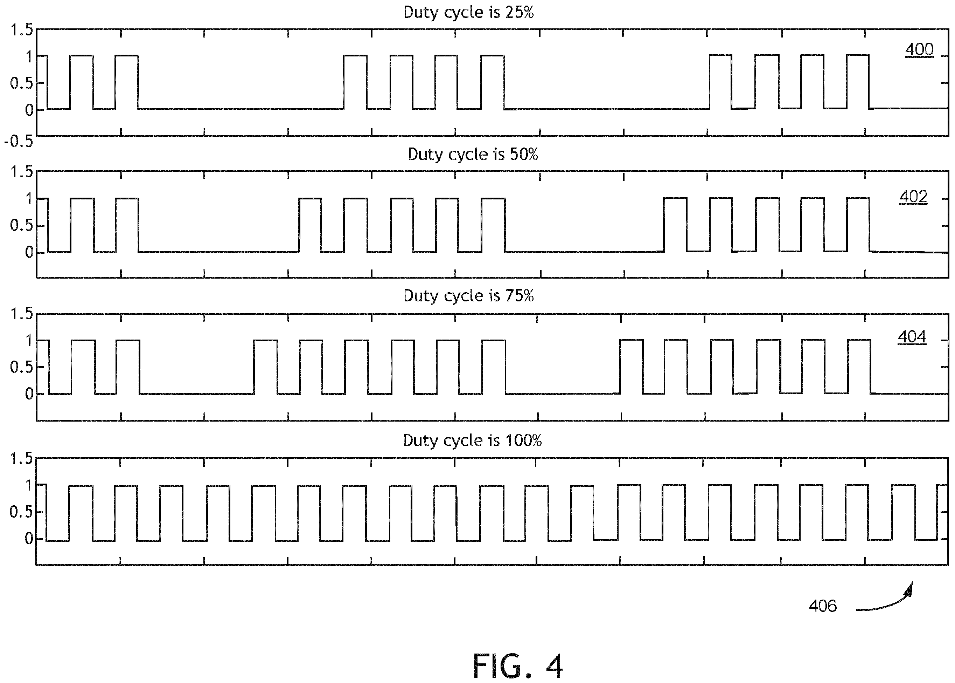

Referring to FIG. 4, block representations of different gratings according an exemplary embodiment is shown. Individual sets of grooves may be defined by duty cycles while patterned regions (regions including sets of grooves) and un patterned regions (regions without sets of grooves) define macro duty cycles 400, 402, 404. The active region of grating is shown at the "ON" portion of the corresponding macro duty cycle 400, 402, 404, and blank periods are shown at the "OFF" portion. Macro duty cycles 400, 402, 404 shown vary from 25% 400, to 50% 402, to 75% 404; as compared to a waveguide that is 100% patterned 406. Other macro duty cycles are envisioned. Furthermore, such macro duty cycles may vary over the surface of the corresponding waveguide; that is to say, such macro duty cycles may not be constant for a particular waveguide.

For example, a bottom of a grating may define a 25% macro duty cycle 400, varying to a 75% macro duty cycle 404 along the axis of propagation of light within the waveguide.

Embodiments of the present disclosure, disposed in a heads-up display, head wearable display, etc., provides a gradient efficiency across the entire output grating to extract light from the waveguide uniformly or in some tailored manner.

It is believed that the inventive concepts disclosed herein and many of their attendant advantages will be understood by the foregoing description of embodiments of the inventive concepts, and it will be apparent that various changes may be made in the form, construction, and arrangement of the components thereof without departing from the scope of the invention as defined by the claims; and individual features from various embodiments may be combined to arrive at other embodiments. The forms herein before described being merely explanatory embodiments thereof, it is the intention of the following claims to encompass and include such changes. Furthermore, any of the features disclosed in relation to any of the individual embodiments may be incorporated into any other embodiment, within the scope of the claims.

## Claims

1. A waveguide comprising:
a plurality of sets of grating grooves (202, 204),
wherein:
each of the plurality of sets of grating grooves is disposed in a surface of the waveguide;
each of the plurality of sets of grating grooves is separated from one or more neighboring sets of grating grooves by regions (206, 208) of the waveguide surface without any grating grooves;
each region of the waveguide surface without any grating grooves is greater than a period of any grating grooves in the neighboring sets of grating grooves; and
the waveguide defines a gradient efficiency across each of the plurality of sets of gratings grating to extract light from the waveguide uniformly.

2. The waveguide of Claim 1, wherein:
a first region (206) of the waveguide surface without any grating grooves defines a first width;
a second region (208) of the waveguide surface without any grating grooves defines a second width; and
the first width is different than the second width.

3. The waveguide of Claim 2, wherein:
the regions of the waveguide surface without any grating grooves are disposed along the waveguide surface in an order of increasing width.

4. The waveguide of any preceding Claim, wherein:
a first set (202) of grating grooves defines a first width;
a second set (204) of grating grooves defines a second width; and
the first width is different than the second width.

5. The waveguide of Claim 4, wherein:
a first region (206) of the waveguide surface without any grating grooves defines a third width;
a second region (208) of the waveguide surface without any grating grooves defines a fourth width; and
the third width is different than the fourth width.

6. The waveguide of Claim 5, wherein:
the plurality of sets of grating grooves and regions of the waveguide surface without any grating grooves are interleaved; and
the plurality of sets of grating grooves are disposed along the waveguide surface in an order of increasing width.

7. The waveguide of Claim 1, 2 or 3, wherein:
a first set of grating grooves defines a first grating density; and
a second set of grating grooves defines a second grating density.

8. A display device comprising:
one or more waveguides (102) as claimed in any preceding claim, each comprising a plurality of sets of grating grooves; and
one or more optical elements disposed to produce an image via the one or more waveguides.

9. The display device of Claim8, wherein the display device comprises a head wearable display, or wherein the display device comprises a heads-up display.

10. A method of manufacturing a waveguide comprising:
determining at least one grating density for a plurality of sets of grating grooves (202, 204);
determining at least one
wherein:
each of the plurality of sets of grating grooves is disposed in a surface of the waveguide;
each of the plurality of sets of grating grooves is separated from one or more neighboring sets of grating grooves by regions (206, 208) of the waveguide surface without any grating grooves;
each region of the waveguide surface without any grating grooves is greater than a period of any grating grooves in the neighboring sets of grating grooves; and
the waveguide defines a gradient efficiency across each of the plurality of sets of gratings grating to extract light from the waveguide.

11. The method of Claim 10, wherein:
a first region of the waveguide surface without any grating grooves defines a first width;
a second region of the waveguide surface without any grating grooves defines a second width; and
the first width is different than the second width.

12. The method of Claim 11, wherein:
the regions of the waveguide surface without any grating grooves are disposed along the waveguide surface in an order of increasing width.

13. The method of Claim 11 or 12, wherein:
a first set of grating grooves defines a first width;
a second set of grating grooves defines a second width; and
the first width is different than the second width.

14. The method of Claim 13, wherein:
a first region of the waveguide surface without any grating grooves defines a third width;
a second region of the waveguide surface without any grating grooves defines a fourth width; and
the third width is different than the fourth width.

15. The method of Claim 14, wherein:
the plurality of sets of grating grooves and regions of the waveguide surface without any grating grooves are interleaved; and
the plurality of sets of grating grooves are disposed along the waveguide surface in an order of increasing width.
